# EUROPEAN PATENT APPLICATION

(11) **EP 3 373 227 A1**
(43) Date of publication of application: **12.09.2018**
(21) Application number: 17160088.5
(22) Date of filing: 09.03.2017
(51) Int. Cl.: G06Q 30/06, G06Q 20/40

(54) **METHOD AND SYSTEM FOR ANONYMOUS VERIFICATION OF A USER IN AN ANONYMOUS DISTANCE-SELLING BUSINESS TRANSACTION**

(71) Applicant: Deutsche Telekom AG, 53113 Bonn (DE); Technische Universität Berlin, 10623 Berlin (DE)
(72) Inventor: ROSHANDEL, Mehran, 13591 Berlin (DE); GHASEMI, Saeed, 13509 Berlin (DE)
(74) Representative: Vossius & Partner Patentanwälte Rechtsanwälte mbB

(57) **Abstract**

A method for verification of a user in an anonymous distance-selling business transaction via a prepaid payment card using a verification system, wherein the prepaid payment card comprises a unique serial number, at least one first TAN number, and all numbers are stored in a human and/or machine readable form thereon; wherein the anonymous verification system comprises a first database for storing verification information, a plurality of second databases for storing of delivery addresses, and a central server for performing prepaid payment card verification; wherein prior to the verification of the user, the prepaid payment card is registered with the anonymous verification system in a production or post-production process and the unique serial number and the corresponding at least one first TAN number are stored in the first database as verification information; wherein, prior to the verification of the user, a delivery address is linked to the unique serial number and stored in the second database during a distribution process of the prepaid payment card.

## Description

The invention relates to the field of telecommunication, and in particular relates to an anonymous verification of a user in an anonymous distance-selling business transaction.

Distance selling, e.g., online shopping has become a popular especially since the internet reaches more and more people. There are many individuals that are looking for shopping alternatives and online shopping appears to be a solution. There are many advantages of online shopping and online stores are ever growing today, products such as clothes, gadgets, shoes, appliances, or even daily groceries can be brought from an online store. Among others, a mentionable advantage of online shopping is that one can buy or sell something using a computer or even a cell-phone. The transaction can be made regardless of the physical location of the buyer and seller, i.e., in another city, country or even continent.

It is an objective of the invention to allow for anonymous verification of a user in an anonymous distance-selling business transaction. This objective is achieved by the subject-matter of the independent claims. The dependent claims relate to further aspects of the invention.

Online shopping provide a variety of services to improve the shopping experience, e.g., users may also purchase and sell items using an online marketplace system or an online auction and shopping website, in which people and businesses buy and sell a broad variety of goods and services worldwide. In addition to the implemented sales system websites sometimes differ from each other by different payment options including, e.g., debit or credit card payments and/or non-traditional payment systems such as PayPal or similar online payment services.

A online payment service allows individuals and businesses to transfer funds electronically. The idea behind the online payment service is simple: The use of a encryption software allows people to make financial transfers between computers. That simple idea has turned into one of the world's primary methods of online payment.

As an alternative to online payment services traditional banking institutions and major retailers offer prepaid credit or prepaid shopping cards which are often named gift cards. Especially in countries without or with a limited banking system such cards are commonly used to pay for online transactions.

However, to perform an online transaction the user first needs to fill out an electronic form in the so-called registration process. Each website usually requires a separate registration. If the user uses multiple websites that registration process becomes tedious and time consuming. Often a user only buys one product from a website. A serious security risk arises, when the personal and bank information is submitted in to numerous websites, therefore each submission is increasing the likelihood of fraud or misuse.

Furthermore, the user is forced to create an account for each purchase, and will end up having numerous accounts with different passwords. On a later return to the same website, the user has to either register again, or remember the old account information which he may have already forgotten.

On the other hand the retailer needs a certain amount of information such as, e.g., a delivery address and banking information, in case no prepaid card is used.

The skilled person knows a plurality of solutions to handle the payment part of a business transaction with a prepaid payment card.

According to the invention a method for the use of a prepaid payment card is provided that allows for a secure, anonym, and simple verification of the user and submission of a delivery address to the retailer.

In one embodiment of the invention a main company creates the prepaid shopping cards and distributes them to different retailers. A User may buy a card which has a serial number and a TAN list with which they can verify his identity and initiate a payment for the distance selling transaction.

In one embodiment there is no need for a registration. The user can execute a secure transaction with an experience being similar to paying online with cash. The order later and by default goes to the store from which the user has bought the prepaid shopping card. In the shop the user has to identify himself by presenting the card with the serial number to complete the transaction.

In one embodiment, the user can register with the main company and specify a delivery address, the user has to register for each card only one time and the user's personal information, i.e., the delivery address will be kept only main-company. In this embodiment the order will be sent to the user-specified address and the card has to be presented upon delivery to complete the transaction.

According to the invention a method for verification of a user in an anonymous distance-selling business transaction via a prepaid payment card using a verification system is provided. The prepaid payment card comprises a unique serial number, at least one first TAN number, and all numbers are stored in a human and/or machine readable form thereon. The anonymous verification system comprises a first database for storing verification information, a plurality of second databases for storing of delivery addresses, and a central server for performing prepaid payment card verification. Prior to the verification of the user, the prepaid payment card is registered with the anonymous verification system in a production or post-production process and the unique serial number and the corresponding at least one first TAN number are stored in the first database as verification information. Still prior to the verification of the user, a delivery address is linked to the unique serial number and stored in the second database during a distribution process of the prepaid payment card. The method comprises the following steps:
a) to initiate the anonymous distance-selling business transaction, the user sending the unique serial number and the first TAN number to a retailer for anonymous verification;
b) the retailer sending the unique serial number and the first TAN number to the central server and requesting verification from the central server;
c) comparing by the central server the received first TAN number with the corresponding first TAN number stored in the central database and identified by the received unique serial number;
d) sending to the retailer from the central server a positive verification response and an identifier pointing to a second database in which the corresponding delivery address is stored, when the first TAN numbers match, otherwise sending a negative verification response to the retailer;
e) in case of a positive verification response, the retailer sending the positive verification response to the identified second database;
f) the second database sending the corresponding delivery address linked to the unique serial number to the retailer; and
g) upon or after delivery from the retailer to the delivery address, the user verifying himself with the unique serial number.

In one aspect of the invention the physical address of a card retailer is stored in the second database during the distribution process, when the prepaid payment card is distributed to the user.

In one aspect of the invention the prepaid payment card additionally comprises at least one second TAN number stored in a human and/or machine readable form thereon. The at least one second TAN number is stored in the first database as verification information. Prior to the verification of the user, a delivery address is linked to the unique serial number and the at least one second TAN number and stored in a second database. The method comprises the additional step of changing the delivery address in the second database, preferably executed after the distribution but prior to step a), wherein the step of changing the delivery address comprises the following steps:
a1) the user sending the unique serial number, the at least one second TAN number, and a new delivery address to the second database;
a2) the second database verifying the user by the second TAN number; and
a3) in case of a positive verification of the second TAN number, changing the stored delivery address to the new address in the second database.

In one aspect of the invention the prepaid payment card additionally comprises at least one second TAN number stored in a human and/or machine readable form thereon. The at least one second TAN number is stored in the first database as verification information. Prior to the verification of the user, a delivery address is linked to the unique serial number and the at least one second TAN number and stored in a second database. The method comprises the additional step of changing the delivery address in the second database, preferably executed after the distribution but prior to step a), wherein the step of changing the delivery address comprises the following steps:
a1) the user sending the unique serial number, the at least one second TAN number, and a new delivery address to the second database via the central server;
a2) the second database verifying the user by the second TAN number; and
a3) in case of a positive verification of the second TAN number, changing the stored delivery address to the new address in the second database via the central server.

In one aspect of the invention the first and second database are integrated with each other.

In one aspect of the invention the first and/or second database are configured to store further personal information of the user and further configured to provide further personal information of the user to the retailer, in case a positive verification response has been send, and the further personal information can be managed when the corresponding second TAN number has been submitted to the second database.

According to the invention there is further provided an anonymous verification system for verification of a user in an anonymous distance-selling business transaction via a prepaid payment card configured to carry out a method according to any one of the aforementioned aspects of the invention.

The prepaid payment card comprises a unique serial number, at least one first TAN number, and all numbers are stored in a human and/or machine readable form thereon. The anonymous verification system comprises a first database for storing verification information, a plurality of second databases for storing of delivery addresses, and a central server for performing prepaid payment card verification. Prior to the verification of the user, the prepaid payment card is registered with the anonymous verification system in a production or post-production process and the unique serial number and the corresponding at least one first TAN number are stored in the first database. Prior to the verification of the user, a delivery address is linked to the unique serial number and stored in the second database during a distribution process of the prepaid payment card.

### Brief description of the drawings

The accompanying drawings are included to provide a further understanding of the invention, to illustrate embodiments of the invention, and together with the description to serve to explain the principle of the invention.

In the drawings:
- Fig. 1: shows an illustration a registration process according to the invention,
- Fig. 2a: shows a delivery address registration according to the invention by a retailer,
- Fig. 2b: shows a delivery address registration according to the invention by a user, and
- Fig. 3: shows the verification stage of the method according to the invention.

### Detailed description of the invention

Reference will now be made in detail to the preferred embodiments of the present invention, examples of which are illustrated in the accompanying drawings. In particular, the preferred embodiments of the present invention as described below refer to an anonymous verification of a user in an anonymous distance-selling business transaction. However, it is clear for the skilled person from the overall disclosure of the present invention that the invention is not limited thereto. The accompanying drawings illustrate exemplary embodiments of the present invention and provide a more detailed description of the present invention. However, the scope of the present invention should not be limited thereto.

In addition, wherever possible, the same reference numbers will be used throughout the drawings to refer to the same or like parts, and a repeated description thereof will be omitted.

In the meantime, although terms including an ordinal number, such as first or second, may be used to describe a variety of constituent elements, the constituent elements are not limited to the terms, and the terms are used only for the purpose of discriminating one constituent element from other constituent elements.

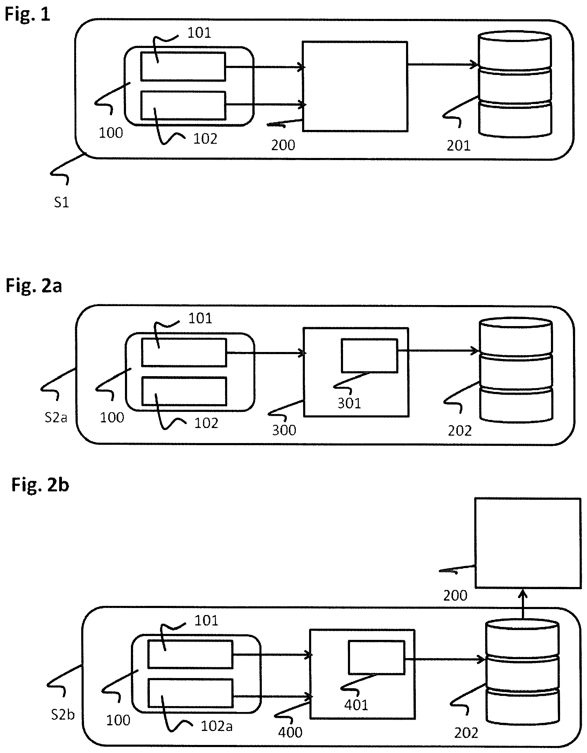

Fig. 1 shows an illustration a registration process according to the invention. During or after the production process of a prepaid shopping card 100. In step S2 the card is registered with a central server 200. During the registration S2 a unique serial number 101 is read off the card and stored in a first database 201. In addition the at least one first TAN number 102, 102a is read and stored in the first database 201. The serial and TAN numbers 101, 102, 102a are stored in a human or machine readable format on the card 100. In preferred embodiments the numbers are stored using at least one of the following technologies: print, QR code, magnetic storage, RFID, and/or NFC.

Fig. 2a shows a delivery address registration according to the invention by a retailer 300 of the card 100. The cards are distributed in bulk to different vendors such as local stores, gas-stations, supermarkets, post-offices, bakeries, and other conventional shopping locations directly selling goods or services to users, hereinafter referred to as retail shop 300. Prior to the final distribution, during the distribution, or at the retail shop 300, the card 100 is registered with a second database 202. The second database stores only information required for the delivery process such as a delivery address. As a default delivery address in step S2 the address of the retail shop 300 is associated with the serial number 101 of the card 100 stored in the second database 202.

After the storage of the default delivery address, the card 100 can be sold to a user 400. In an alternative embodiment of the invention no default address is stored prior to the retail of the card 100, and the user 400 is required to register a delivery address with the second database 202 by himself.

In some embodiments the registration of a delivery address with the second database 202 may be performed via the central server, preferably using connection with the main-company. Alternatively the user 400 may be able to access the database 202 via a third party service.

In some embodiments different local second databases 202 may be used corresponding to different cities, regions or the like.

Fig. 2b shows a delivery address registration according to the invention by the user 400. In one embodiment of the invention the user 400 can specify a delivery address, e.g., his home address or a location where we will be at a future time and will be able to complete the transaction. Step S2b is the changing or registering of a delivery address by the user 400. The user 400 transmits the serial number 101, the new delivery address, and one of the at least one second TAN number 102a to the database 202. The second TAN number 102a is used to authenticate with the second database 202. The second database may communicate with the central server 200 and/or the first database 201 to authenticate the second TAN number102a.

Preferably, the user 400 receives a confirmation whether or not the change or registration of a new delivery address was successful.

Step S2a may be repeated a number of times. The card 100 has to be configured to provide a number of second TAN corresponding to the number of allowed address changes. The number may also be zero on one embodiment of the invention, i.e., the user 400 is not allowed to change the delivery address after the retail of the card 100.

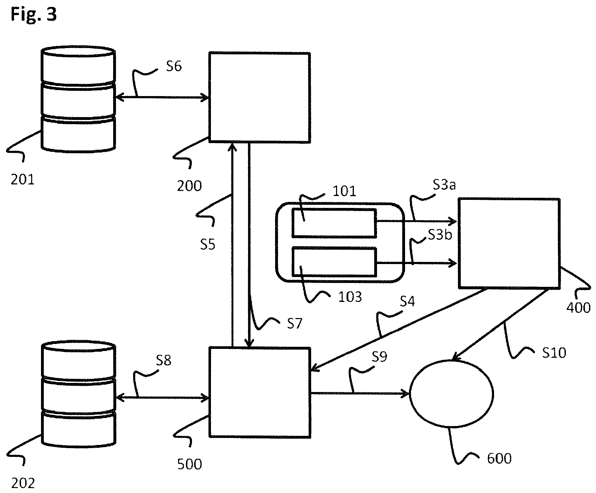

Fig. 3 shows the verification stage of the method according to the invention. To start the verification stage the user 400 reads in steps S3a and S3b the serial number 101 and a first TAN number 103 and submits both in step S4 to the retailer 500, with whom the user wishes to perform a distance-selling transaction. The retailer 500 relays said information to the central server 200 in step S5. The central server communicates with the first database 201 in step S6 to verify the serial number 101 and the TAN number. In case of a positive verification a positive verification response is send from the central server 200 to the retailer 500 in step S7. Together with or contained in the verification response a identifier is transmitted to the retailer 500 allowing the retailer 500 to identify the second database 202 comprising the delivery address associated with the serial number. The retailer 500 relays said response to the second database 202 and receives the delivery address stored in the second database and associated with the serial number in step S8. In a last step the user 400, or a person who has received the card 100 from the user 400 may present the card 100 with the serial number 101 to identify himself as the legitimate recipient of the delivery 600 at the delivery address to complete the transaction.

After the user has been verified and/or the transaction has been completed the retailer can receive a payment for the transaction. The payment can be handled using any known payment solution for prepaid shopping cards.

The skilled person realizes that the process of verification and transmission of a delivery address is completely anonymous and secure if the user 400 uses the retail store 300 as delivery address. The process remains highly anonymous and secure even if the user registers his own address as delivery address. The delivery address is only stored in the second database 202 and can only be accessed by a retailer 500 when presenting a positive verification response. At no time the user 400 has to transmit banking information or any personal data to the retailer 500.

The skilled person realizes that the data transmission in certain steps may preferably be executed via an secure connection. However, the skilled person also realizes that merely the connections between the central server 200 and the databases 201 and 202 have to be heavily secured. On the other, in some embodiments of the invention hand all connections originating from the user could be unsecure, since they only handle data which is useless to any eavesdropping third party. In a preferred embodiment secure connections are used for all data transmissions.

The following embodiment describes an embodiment of the invention from a perspective of the user 400. The user 400 wants to initiate a distance-selling transaction with a website 500 The user 400 has decided to not register and would like to receive the delivery at the store 300 where he had previously bought the prepaid shopping card 100. The user 400 enters the serial number 101 of the card 100 and one of the TANs 102 into the website. The website's server 500 asks the card manufacturer company 200 for a verification of the entered serial number 101 and TAN 102. After this communication between two online servers 200 and 500, the transaction can start.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

## Claims

1. A method for verification of a user in an anonymous distance-selling business transaction via a prepaid payment card using a verification system,
wherein the prepaid payment card comprises a unique serial number, at least one first TAN number, and all numbers are stored in a human and/or machine readable form thereon;
wherein the anonymous verification system comprises a first database for storing verification information, a plurality of second databases for storing of delivery addresses, and a central server for performing prepaid payment card verification;
wherein prior to the verification of the user, the prepaid payment card is registered with the anonymous verification system in a production or post-production process and the unique serial number and the corresponding at least one first TAN number are stored in the first database as verification information;
wherein, prior to the verification of the user, a delivery address is linked to the unique serial number and stored in the second database during a distribution process of the prepaid payment card; and
wherein the method comprises the following steps:
a) to initiate the anonymous distance-selling business transaction, the user sending the unique serial number and the first TAN number to a retailer for anonymous verification;
b) the retailer sending the unique serial number and the first TAN number to the central server and requesting verification from the central server;
c) comparing by the central server the received first TAN number with the corresponding first TAN number stored in the central database and identified by the received unique serial number;
d) sending to the retailer from the central server a positive verification response and an identifier pointing to a second database in which the corresponding delivery address is stored, when the first TAN numbers match, otherwise sending a negative verification response to the retailer;
e) in case of a positive verification response, the retailer sending the positive verification response to the identified second database;
f) the second database sending the corresponding delivery address linked to the unique serial number to the retailer; and
g) upon or after delivery from the retailer to the delivery address, the user verifying himself with the unique serial number.

2. A method for verification of a user in an anonymous distance-selling business transaction according to claim 1, wherein the physical address of a card retailer is stored in the second database in the distribution process, when the prepaid payment card is distributed to the user.

3. A method for verification of a user in an anonymous distance-selling business transaction according to claim 1 or 2,
wherein the prepaid payment card additionally comprises at least one second TAN number stored in a human and/or machine readable form thereon,
wherein the at least one second TAN number is stored in the first database as verification information;
wherein prior to the verification of the user, a delivery address is linked to the unique serial number and the at least one second TAN number and stored in one second database, and
wherein the method comprises the additional step of changing the delivery address in the second database, preferably executed after the distribution but prior to step a), wherein the step of changing the delivery address comprises the following steps:
a1) the user sending the unique serial number, the at least one second TAN number, and a new delivery address to the second database;
a2) the second database verifying the user by the second TAN number; and
a3) in case of a positive verification of the second TAN number, changing the stored delivery address to the new address in the second database.

4. A method for verification of a user in an anonymous distance-selling business transaction according to any one of claims 1 to 3, wherein the first and second database are integrated with each other.

5. A method for verification of a user in an anonymous distance-selling business transaction according to any one of claims 1 to 4,
wherein the first and/or second database are configured to store further personal information of the user and further configured to provide further personal information of the user to the retailer, in case a positive verification response has been send, and
wherein the further personal information can be managed when the corresponding second TAN number has been submitted to the second database.

6. A anonymous verification system for verification of a user in an anonymous distance-selling business transaction via a prepaid payment card configured to carry out a method according to any one of claims 1 to 5,
wherein the prepaid payment card comprises a unique serial number, at least one first TAN number, and all numbers are stored in a human and/or machine readable form thereon;
wherein the anonymous verification system comprises a first database for storing verification information, a plurality of second databases for storing of delivery addresses, and a central server for performing prepaid payment card verification;
wherein prior to the verification of the user, the prepaid payment card is registered with the anonymous verification system in a production or post-production process and the unique serial number and the corresponding at least one first TAN number are stored in the first database as verification information; and
wherein, prior to the verification of the user, a delivery address is linked to the unique serial number and stored in the second database during a distribution process of the prepaid payment card.

## Amended claims

### Amended claims in accordance with Rule 137(2) EPC.

1. A method for verification of a user in an anonymous distance-selling business transaction via a prepaid payment card using a verification system,
wherein the anonymous verification system comprises a first database for storing verification information and a central server for performing prepaid payment card verification;
wherein the prepaid payment card comprises a unique serial number, at least one first TAN number, and all numbers are stored in a human and/or machine readable form thereon;
wherein prior to the verification of the user, the prepaid payment card is registered with the anonymous verification system in a production or post-production process and the unique serial number and the corresponding at least one first TAN number are stored in the first database as verification information;
**characterized in that**
the anonymous verification system further comprises a plurality of second databases for storing of delivery addresses;
wherein, prior to the verification of the user, a delivery address is linked to the unique serial number and stored in the second database during a distribution process of the prepaid payment card; and
wherein the method comprises the following steps:
a) to initiate the anonymous distance-selling business transaction, the user sending the unique serial number and the first TAN number to a retailer for anonymous verification;
b) the retailer sending the unique serial number and the first TAN number to the central server and requesting verification from the central server;
c) comparing by the central server the received first TAN number with the corresponding first TAN number stored in the central database and identified by the received unique serial number;
d) sending to the retailer from the central server a positive verification response and an identifier pointing to a second database in which the corresponding delivery address is stored, when the first TAN numbers match, otherwise sending a negative verification response to the retailer;
e) in case of a positive verification response, the retailer sending the positive verification response to the identified second database;
f) the second database sending the corresponding delivery address linked to the unique serial number to the retailer; and
g) upon or after delivery from the retailer to the delivery address, the user verifying himself with the unique serial number.

2. A method for verification of a user in an anonymous distance-selling business transaction according to claim 1, wherein the physical address of a card retailer is stored in the second database in the distribution process, when the prepaid payment card is distributed to the user.

3. A method for verification of a user in an anonymous distance-selling business transaction according to claim 1 or 2,
wherein the prepaid payment card additionally comprises at least one second TAN number stored in a human and/or machine readable form thereon,
wherein the at least one second TAN number is stored in the first database as verification information;
wherein prior to the verification of the user, a delivery address is linked to the unique serial number and the at least one second TAN number and stored in one second database, and
wherein the method comprises the additional step of changing the delivery address in the second database, preferably executed after the distribution but prior to step a), wherein the step of changing the delivery address comprises the following steps:
a1) the user sending the unique serial number, the at least one second TAN number, and a new delivery address to the second database;
a2) the second database verifying the user by the second TAN number; and
a3) in case of a positive verification of the second TAN number, changing the stored delivery address to the new address in the second database.

4. A method for verification of a user in an anonymous distance-selling business transaction according to any one of claims 1 to 3, wherein the first and second database are integrated with each other.

5. A method for verification of a user in an anonymous distance-selling business transaction according to any one of claims 1 to 4,
wherein the first and/or second database are configured to store further personal information of the user and further configured to provide further personal information of the user to the retailer, in case a positive verification response has been send, and
wherein the further personal information can be managed when the corresponding second TAN number has been submitted to the second database.

6. A anonymous verification system for verification of a user in an anonymous distance-selling business transaction via a prepaid payment card configured to carry out a method according to any one of claims 1 to 5,
wherein the prepaid payment card comprises a unique serial number, at least one first TAN number, and all numbers are stored in a human and/or machine readable form thereon;
wherein the anonymous verification system comprises a first database for storing verification information and a central server for performing prepaid payment card verification;
wherein prior to the verification of the user, the prepaid payment card is registered with the anonymous verification system in a production or post-production process and the unique serial number and the corresponding at least one first TAN number are stored in the first database as verification information; and
**characterized in that**
the anonymous verification system further comprises a plurality of second databases for storing of delivery addresses,
wherein, prior to the verification of the user, a delivery address is linked to the unique serial number and stored in the second database during a distribution process of the prepaid payment card.
